# EUROPÄISCHE PATENTSCHRIFT

(11) **EP 2 946 874 B1**
(45) Veröffentlichungstag und Bekanntmachung des Hinweises auf die Patenterteilung: **21.06.2017**
(21) Anmeldenummer: 15162873.2
(22) Anmeldetag: 09.04.2015
(51) Int. Cl.: B23Q 7/14, B65G 35/06, B65G 47/244

(54) **GREIFEINRICHTUNG MIT BEWEGLICHEM DRUCKSTÜCK**
GRIPPING DEVICE WITH MOVABLE PRESSURE PIECE
DISPOSITIF PRÉHENSEUR DOTÉ D'UNE PLAQUE D'APPUI MOBILE

(30) Priorität: 29.04.2014 DE 102014208022
(43) Veröffentlichungstag der Anmeldung: 25.11.2015
(73) Patentinhaber: ROBERT BOSCH GMBH, 70442 Stuttgart (DE)
(72) Erfinder: Kiebel, Markus, 70499 Stuttgart (DE)
(74) Vertreter: Maiß, Harald

(56) Entgegenhaltungen:
- DE-A1-102009 013 778
- JP-A- H0 985 664
- JP-A- H07 186 082
- US-A- 3 442 410
- US-A1- 2012 139 278
- US-B1- 6 308 818
- "Transfer system TS 2plus catalog", , 1. Juni 2013 (2013-06-01), Seiten 1-438, XP055221172, Gefunden im Internet: URL:http://www.betz.cz/download_soubory/Vy robni_linky_TS2_Rexroth_4_2.pdf [gefunden am 2015-10-15]

## Beschreibung

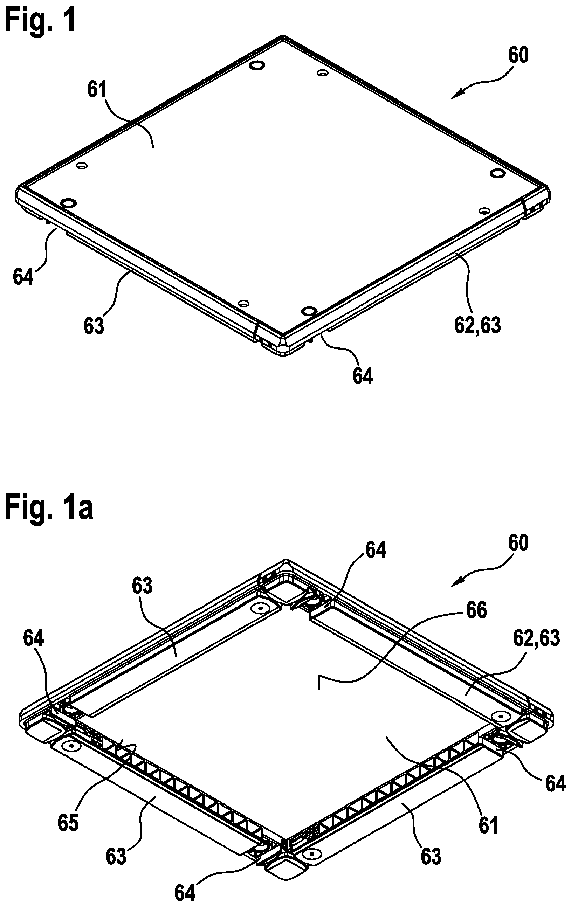

Die Erfindung betrifft eine Greifeinrichtung gemäß dem Oberbegriff von Anspruch 1. Aus dem Dokument JP H07 186082 A ist eine Greifeinrichtung nach dem Oberbegriff des Anspruchs 1 bekannt. Aus dem Katalog "Transfersystem TS 2plus" der Bosch Rexroth AG, Ausgabe 4.2, Seite 7-24 ist die Hub-Dreheinheit HD 2 bekannt, welche zum Drehen bzw. Umorientieren von Werkstückträgern auf einer Förderstrecke dient. Diese Drehvorrichtung basiert auf einem kombinierten Hub-Dreh-Antrieb. Sie wird eingesetzt, um auch bei einer Änderung der Förderrichtung in Ecken oder Verzweigungen der Förderstrecke eine gleichbleibende Orientierung der Werkstückträger relativ zur Förderrichtung zu erreichen. Die Erfindung betrifft eine Greifeinrichtung nach Anspruch 1. Die Drehvorrichtung hat eine Greifeinrichtung zum Greifen eines plattenartigen Werkstückträgers von unten, wie er in den Fig. 1 und 1a der vorliegenden Anmeldung dargestellt ist. Die Greifeinrichtung umfasst einen Hauptkörper, der bezüglich einer Hochachse drehbar ist, welche senkrecht zur Förderstrecke ausgerichtet ist. Der Hauptkörper ist einstückig in Form einer ebenen Platte ausgebildet. Er hat vier Eckbereiche, in denen jeweils eine gerade erste und eine gerade zweite Greifkante angeordnet sind, welche im rechten Winkel zueinander angeordnet sind. Die Eckbereiche sind derart verteilt um die Hochachse angeordnet, dass die Greifkanten ein Greifrechteck definieren, wobei die Greifeinrichtung vollständig innerhalb des Greifrechtecks angeordnet ist. Das Greifrechteck findet seine Entsprechung an der Innenumfangsfläche des rechteckigen Rahmens des Werkstückträgers. Weiter definieren die Greifkanten eine Greifebene, welche senkrecht zur Hochachse angeordnet ist, wobei die Greifeinrichtung vollständig auf einer Seite der Greifebene angeordnet ist. Die Greifebene findet ihre Entsprechung am Werkstückträger in der ebenen Unterseite der Auflageplatte, welche oben auf dem genannten Rahmen befestigt ist.

Der Vorteil der vorliegenden Erfindung besteht darin, dass der Werkstückträger mit sehr geringem Spiel gegriffen werden kann. Dabei wird gleichzeitig vermieden, dass die Greifeinrichtung an den Förderträgern des zugeordneten Förderers streift. Weiter kann die erfindungsgemäße Greifeinrichtung problemlos an unterschiedlich große Werkstückträger angepasst werden, wobei für unterschiedlich große Greifeinrichtungen sehr viele identische Teile verwendet werden können, die dementsprechend kostengünstig herstellbar sind.

Erfindungsgemäß wird eine Greifeinrichtung nach Anspruch 1 vorgeschlagen. In den abhängigen Ansprüchen sind vorteilhafte Weiterbildungen und Verbesserungen der Erfindung angegeben. Erfindungsgemäß sind die Druckstücke derart beweglich gelagert, dass sich der Abstand zweier paralleler Greifkanten durch Einwirkung einer Gewichtskraft des Werkstückträgers auf die Greifeinrichtung, insbesondere auf die Druckstücke vergrößert. Damit kann auf einen gesonderten Antrieb für die Druckstücke verzichtet werden. Wenn die Gewichtstraft der Werkstückträger gemäß der bevorzugten Lösung unmittelbar auf die Drückstücke einwirkt, ergibt sich eine besonders einfache Greifeinrichtung. Erfindungsgemäß sind die Druckstücke jeweils bezüglich einer Drehachse drehbar gelagert, wobei die Drehachse senkrecht zur Hochachse verläuft. Die oben als bevorzugt beschriebene Bewegung der Greifkanten kann damit auf besonders einfache Weise erreicht werden. Der Umstand, dass sich die Greifkanten auch parallel zur Hochachse bewegen, kann durch geeignete Relativanordnung von Drehachse und zugeordneter Greifkante auf ein Mindestmaß reduziert werden.

Es ist bevorzugt, dass in jedem Eckbereich ein gesonderter Greifkörper angeordnet ist, welcher fest mit dem Hauptkörper verbunden ist, wobei die Druckstücke an einem zugeordneten Greifkörper beweglich gelagert sind. Die Baugruppe aus dem Greifkörper und den zugeordneten Druckstücken ist vorzugsweise in allen vier Eckbereichen identisch ausgeführt. Sie kann darüber hinaus bei verschieden großen Greifeinrichtungen identisch verwendet werden. Die genannte Baugruppe kann damit in großen Stückzahlen kostengünstig hergestellt werden. Die Greifkörper sind vorzugsweise mit dem Hauptkörper verschraubt.

Es ist bevorzugt, dass die Greifkörper und die Druckstücke an der dem Werkstückträger zugewandten Seite jeweils eine ebene Oberfläche aufweisen, wobei die beiden genannten ebenen Oberflächen in einer Stellung der Druckstücke in einer Flucht angeordnet sind. Die von der Greifeinrichtung gegriffenen Werkstückträger liegen damit auf den genannten ebenen Oberflächen auf, so dass geringe Flächenpressungen gegeben sind und zwar auch dann, wenn die Werkstückträger mit einem hohen Gewicht beladen sind. Erfindungsgemäß ist den Druckstücken jeweils eine Rückstellfeder zugeordnet, welche so eingebaut ist, dass sie durch Einwirkung einer Gewichtskraft des Werkstückträgers auf die Greifeinrichtung, insbesondere auf die Druckstücke unter Spannung gesetzt wird. Durch die Rückstellfeder werden die Druckstücke vorzugsweise in eine Stellung bewegt, in der die Greifkanten einen minimalen Abstand aufweisen. Dementsprechend kann die Greifeinrichtung einfach in den Werkstückträger eingeführt bzw. zwischen den Führungsträgern des zugeordneten Förderers hindurch geführt werden.

Es ist bevorzugt, dass die Druckstücke jeweils eine Anschlagfläche aufweisen, welche so angeordnet ist, dass sie von der Rückstellfeder gegen eine zugeordnete Gegenanschlagfläche gedrückt wird, wenn sich kein Werkstückträger auf der Greifeinrichtung befindet. Durch geeignete Anordnung der Anschlag- und der Gegenanschlagfläche kann der Weg eingestellt werden, welchen die Druckstücke ausführen, wenn sie in bzw. außer Eingriff mit dem Werkstückträger gebracht werden.

Es ist bevorzugt, dass die Rückstellfeder von einem Federgehäuse und einer Kugel umschlossen wird, wobei die Kugel das Druckstück unmittelbar berührt. Die Baueinheit aus Federgehäuse, Rückstellfeder und Kugel kann daher vorgefertigt und besonders einfach an der Greifeinrichtung montiert werden. Vorzugsweise ist die genannte Baueinheit im Greifkörper aufgenommen.

Es ist bevorzugt, dass ein Förderer einen ersten und einen zweiten Förderträger aufweist, die sich unter einem ersten Abstand beabstandet in eine Förderrichtung erstrecken, wobei die Druckstücke so angeordnet sind, dass ein zweiter Abstand zweier paralleler Greifkanten kleiner als der erste Abstand ist, wenn kein Werkstückträger auf der Greifeinrichtung aufliegt, wobei der zweite Abstand größer als der erste Abstand ist, wenn ein Werkstückträger auf der Greifeinrichtung aufliegt.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird im Folgenden anhand der beigefügten Zeichnungen näher erläutert. Es stellt dar:
- Fig. 1: eine perspektivische Ansicht eines Werkstückträgers zur Verwendung mit der erfindungsgemäßen Greifvorrichtung;
- Fig. 1a: eine perspektivische Ansicht des Werkstückträgers nach Fig. 1 von unten;
- Fig. 2: eine perspektivische Ansicht einer Drehvorrichtung mit einer erfindungsgemäßen Greifeinrichtung;
- Fig. 3: eine Teilschnittansicht eines Förderers mit einer erfindungsgemäßen Greifeinrichtung;
- Fig. 4: eine perspektivische Ansicht des Greifkörpers mit den zugeordneten Druckstücken; und
- Fig. 5: eine Schnittansicht der Baugruppe nach Fig. 4, wobei die Schnittebene senkrecht zur zweiten Greifkante verläuft.

Fig. 1 zeigt eine perspektivische Ansicht eines Werkstückträgers 60 zur Verwendung mit der erfindungsgemäßen Greifvorrichtung von oben, wobei Fig. 1a den gleichen Werkstückträger 60 von unten zeigt. Der Werkstückträger 60 umfasst eine Auflageplatte 61, die vorliegend als quadratische Platte mit konstanter Dicke ausgebildet ist. Es können aber auch rechteckige Werkstückträger mit rechteckigen Auflageplatten zum Einsatz kommen. Die Auflageplatte 61 besteht aus Kunststoff, Stahl oder Aluminium. Die Auflageplatte 61 ist in einem angepassten quadratischen Rahmen 62 eingefasst, der aus vier gesonderten Rahmenteilen 63 zusammen gesetzt ist, welche identisch ausgebildet sind. Bei rechteckigen Werkstückträgern unterscheiden sie sich hinsichtlich der Länge. Jedes Rahmenteil 63 hat einen Vereinzelerdurchlass 64, so dass ein bewegliches Sperrteil eines zugeordneten Vereinzelers nur mit einer einzigen Seitenfläche des Rahmens 62 zur Anlage kommen kann. Die erfindungsgemäße Greifeinrichtung greift innerhalb der Innenumfangsfläche 65 des Rahmens ein, wobei die ebene Unterseite 66 der Auflageplatte 61 auf der erfindungsgemäßen Greifeinrichtung aufliegt.

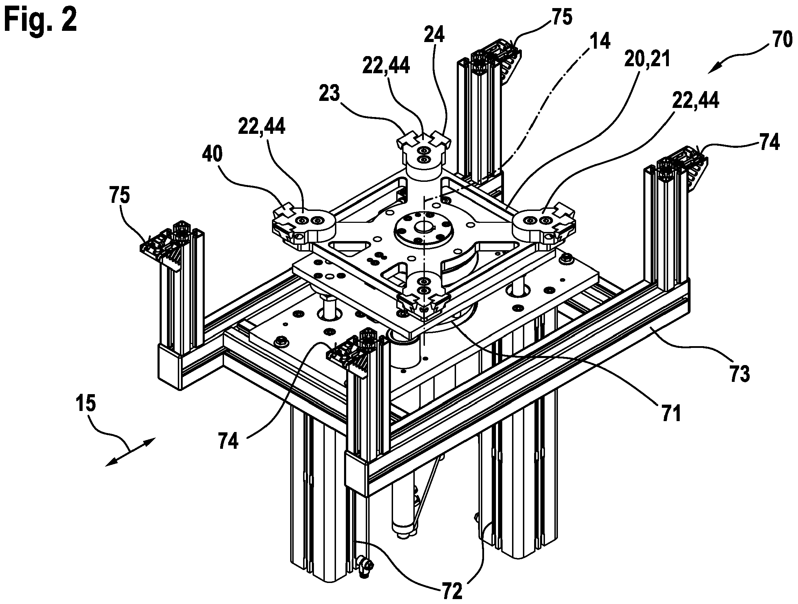

Fig. 2 zeigt eine perspektivische Ansicht einer Drehvorrichtung 70 mit einer erfindungsgemäßen Greifeinrichtung 20.

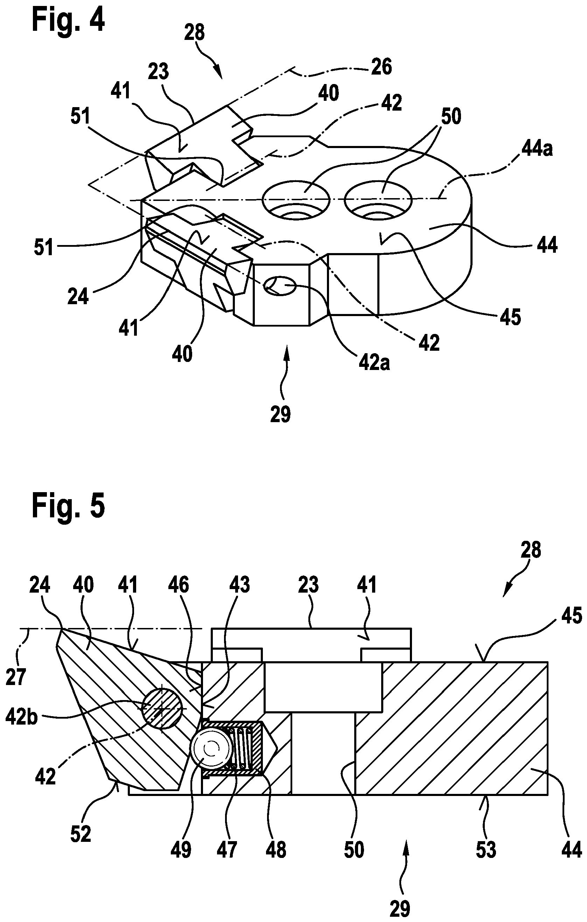

Die Drehvorrichtung 70 weist ein Gestell 73 auf, welches aus Aluminiumstrangpressprofilen zusammengesetzt ist, welche mit hinterschnittenen T-förmigen Nuten versehen sind. Die Dreheinrichtung 70 weist einen Hubantrieb 72 in Form zweier Pneumatikzylinder auf, mit denen die Greifeinrichtung 20 in Richtung der Hochachse 14 angehoben und abgesenkt werden kann. Weiter ist ein Drehantrieb 71 in Form eines Drehflügelantriebs vorgesehen, mit dem die Greifeinrichtung 20 bezüglich der Hochachse 14 verdreht werden kann, wobei wahlweise eine 90°- oder eine 180°-Drehung der Greifeinrichtung 20 durchgeführt wird. In den verschiedenen Drehstellungen verlaufen die Seiten des Greifrechtecks (Nr. 26 in Fig. 4) parallel zur Förderrichtung 15.

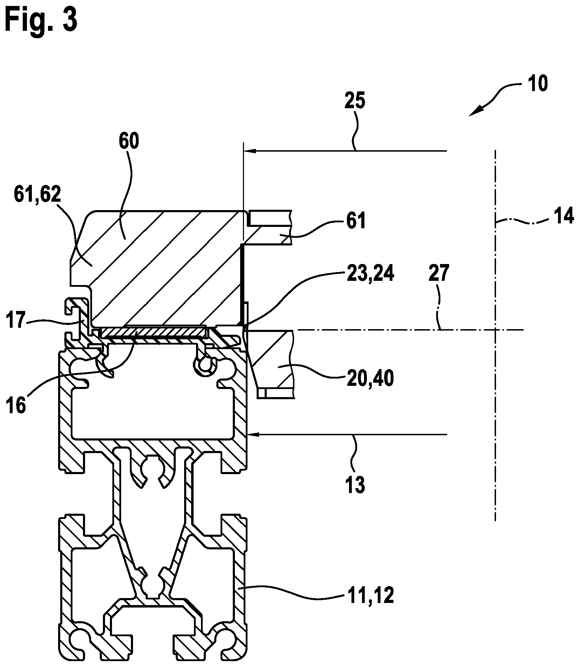

Auf den Befestigungsflächen 74 wird ein erster Förderträger befestigt, wobei auf den Befestigungsflächen 75 ein zweiter Förderträger befestigt wird. Der erste und der zweite Förderträger (Nr. 11; 12 in Fig. 3) erstrecken sich mit einem ersten Abstand (Nr. 13 in Fig. 3) parallel zur Förderrichtung 15, wobei sie spielgelsymmetrisch ausgebildet sind.

Die Greifeinrichtung 20 weist einen Hauptkörper 21 auf, der in Form einer ebenen Platte mit konstanter Dicke ausgebildet ist. Der Hauptkörper 21 besteht vorzugsweise aus Aluminium. Sein Außenumriss ist vorliegend quadratisch ausgebildet, wobei an den vier Eckbereichen 22 nach außen wegstehende Vorsprünge vorgesehen sind. Innen weist er einige Aussparungen auf, welche zur Gewichtseinsparung dienen, damit die Greifeinrichtung schnell beschleunigt und abgebremst werden kann. In den vier Eckbereichen 22 ist je ein gesonderter Greifkörper 44 mittels Schrauben befestigt, der mit Bezug auf die Fig. 4 und 5 noch genauer erläutert wird.

Fig. 3 zeigt eine Teilschnittansicht eines Förderers 10 mit einer erfindungsgemäßen Greifeinrichtung 20, wobei von der Greifeinrichtung 20 nur ein Druckstück 40 zu erkennen ist. Gezeigt ist nur eine Hälfte des Förderers 10, wobei die gegenüberliegende Hälfte spielgelsymmetrisch ausgebildet ist.

Die Förderträger 11, 12 sind als Aluminiumstrangpressprofile ausgebildet, deren Querschnittsform spiegelsymmetrisch gestaltet ist, so dass für den ersten und den zweiten Förderträger 11; 12 das gleiche Profil verwendet werden kann. Oben auf die Förderträger 11; 12 ist eine gesonderte Seitenführungsleiste 17 aufgeschnappt, welche aus Kunststoff im Extrusionsverfahren hergestellt ist. Die Seitenführungsleiste 17 ist L-förmig ausgebildet, wobei der kürzere L-Schenkel der Seitenführung der Werkstückträger 60 dient. Auf den längeren L-Schenkel, welcher auf dem genannten Aluminiumprofil aufliegt, liegt ein Förderriemen 16 auf, wobei alternativ auch Förderträger mit Förderketten verwendet werden können. Der Förderriemen 16 ist endlos umlaufend ausgebildet, wobei er von einem Elektromotor in Bewegung versetzt wird, so dass der darauf aufliegende Werkstückträger 60 reibschlüssig mitgenommen wird.

Die der Erfindung zugrunde liegenden Werkstückträger 60 weisen die Besonderheit auf, dass die Innenmaße des Rahmens 62 etwas größer sind als der erste Abstand 13 zwischen dem ersten und dem zweiten Förderträger 11, 12 ist. Dementsprechend ist es vorteilhaft, dass der zweite Abstand 25 der Greifkanten 23; 24 etwas größer ist als der erste Abstand 13, wenn die Greifeinrichtung 20 in den Werkstückträger 60 eingreift. Hierbei ist anzumerken, das Fig. 3 entgegen den tatsächlichen Verhältnissen die Druckstücke 40 in der waagerechten Greifstellung zeigt, obwohl sie noch mit Abstand zur Auflageplatte 61 angeordnet sind. Tatsächlich werden sie erst in die waagerechte Stellung gedrückt, wenn die Auflageplatte 61 in Berührung mit den Greifkanten 23; 24 kommt.

Wenn die Greifeinrichtung 20 zwischen den Förderträgern 11; 12 bewegt werden soll, ist der zweite Abstand 25 vorzugsweise kleiner als der erste Abstand 13, was mit der erfindungsgemäßen beweglichen Lagerung der Druckstücke 40 erreicht wird, welche mit Bezug auf Fig. 4 und 5 noch näher erläutert wird.

In Fig. 3 ist die Hochachse 14, welche mit der Symmetrieebene des Förderers 10 zusammenfällt, als Strichpunktlinie eingezeichnet. Weiter ist die Greifebene 27, welche von den Greifkanten 23; 24 der Greifeinrichtung 20 definiert wird, als Strichpunktlinie eingezeichnet.

Fig. 4 zeigt eine perspektivische Ansicht des Greifkörpers 44 mit den zugeordneten Druckstücken 40. Der Greifkörper 44 ist in Form einer ebenen Platte mit konstanter Dicke ausgeführt, wobei er aus Stahl oder Aluminium besteht. Er ist spiegelsymmetrisch bezüglich einer Symmetriemitte 44a ausgebildet, welche als Strichpunktlinie angedeutet ist. Auf der Symmetriemitte 44a sind zwei Befestigungsbohrungen 50 angeordnet, welche mit Zylindersenkungen versehen sind. Die Befestigungsbohrungen 50 werden von nicht dargestellten Befestigungsschrauben durchsetzt, mit denen die Greifkörper 44 am Hauptkörper (Nr. 21 in Fig. 2) festgeschraubt sind.

Dem Greifkörper 44 sind zwei identisch ausgebildete Druckstücke 40 zugeordnet, welche spiegelsymmetrisch bezüglich der Symmetriemitte 44a angeordnet sind. Die Druckstücke 40 weisen jeweils eine erste bzw. eine zweite, gerade Greifkante 23; 24 auf, welche im rechten Winkel zueinander angeordnet sind. Die Druckstücke 40 sind jeweils drehbeweglich an dem Greifkörper 44 gelagert, wobei die entsprechende Drehachse 42 parallel zur betreffenden Greifkante 23; 24 verläuft. Die Greifkanten 23; 24 werden oben von einer ebenen Oberfläche 41 des Druckstücks 40 gebildet, welche in einer Drehstellung des Druckstücks 40 in einer Flucht mit einer ebenen Oberfläche 45 des Greifkörpers 44 angeordnet ist. Die ebene Oberfläche 45 des Greifkörpers 44 ist senkrecht zur Hochachse ausgerichtet.

Die Druckstücke 40 sind jeweils in einer Nut 51 des Greifkörpers 44 mit geringem Spiel aufgenommen, so dass sie in Richtung ihrer Drehachse 42 im Wesentlichen nicht linearbeweglich sind. Im Bereich der Greifkante 23; 24 steht das Druckstück 40 aus dem Greifkörper 44 heraus, wobei es breiter als die Nut 51 ausgebildet ist, damit eine genügend große Kontaktfläche zum Werkstückträger vorhanden ist.

Hinzuweisen ist noch auf das mit Strichpunktlinien angedeutete Greifrechteck 26, wobei in Fig. 4 nur die betreffenden Ecken des Greifrechtecks dargestellt sind. Die Seiten des Greifrechtecks 26 fallen mit der ersten bzw. der zweiten Greifkante 23; 24 zusammen. Die übrigen Greifkanten liegen in entsprechender Weise in den anderen Ecken des Greifrechtecks 26. Der Greifkörper 44 steht hinter dem Greifrechteck 26 bzw. den Greifkanten 23; 24 zurück, so dass die Greifeinrichtung vollständig innerhalb des Greifrechtecks 26 angeordnet ist.

Weiter ist auf die Bohrung 42a hinzuweisen, in welcher ein Zylinderstift (Nr. 42b in Fig. 5) aufgenommen ist, welcher die Drehachse 42 für das Druckstück 40 bildet.

Fig. 5 zeigt eine Schnittansicht der Baugruppe nach Fig. 4, wobei die Schnittebene senkrecht zur zweiten Greifkante 24 verläuft. Zu erkennen ist insbesondere die Rückstellfeder 47, mit welcher das Druckstück 40 in eine Drehstellung gedrückt wird, in der die betreffende Greifkante 24 am weitesten innen und am weitesten oben angeordnet ist. Die Rückstellfeder 47 ist in einem topfartigen Federgehäuse 48 aufgenommen, welches in ein zugeordnetes Sackloch im Greifkörper 44 eingepresst ist. Die nach außen weisende Öffnung des Federgehäuses 48 ist mit einer Kugel aus gehärtetem Stahl verschlossen, welche von einem Bund innerhalb des Federgehäuses 48 gehalten wird, so dass die Baueinheit aus Rückstellfeder 47, Federgehäuse 48 und Kugel 49 gesondert vormontiert werden kann. Im eingebauten Zustand wird die Kugel 49 vom Druckstück 40 bereits etwas in das Federgehäuse 48 hinein gedrückt, so dass die Rückstellfeder 47 unter Spannung gesetzt wird. Dadurch wird eine ebene Anschlagfläche 43 am Druckstück 40 gegen eine ebene Gegenanschlagfläche 46 am Greifkörper 44 gedrückt. Die Anschlag- und die Gegenanschlagfläche 43; 46 sind so angeordnet, dass die erste und die zweite Greifkante 23; 24 in diesem Zustand, in dem kein Werkstückträger auf der Greifeinrichtung aufliegt, oberhalb der ebenen Oberfläche 45 des Greifkörpers 44 angeordnet sind.

Wenn ein Werkstückträger auf der Greifeinrichtung aufliegt, liegt die erste bzw. die zweite Greifkante 23; 24 an der Unterseite (Nr. 66 in Fig. 1a) des Werkstückträges an, so dass sie von dessen Gewichtskraft nach unten gerückt werden, bis sie in einer Flucht mit der ebenen Oberfläche 45 des Greifkörpers 44 angeordnet sind. Dabei wandert die Greifkante 23; 24 nach außen, so dass sich der zweite Abstand (Nr. 25 in Fig. 3) einander gegenüberliegender Greifkanten 23; 24 vergrößert. Die genannte Unterseite liegt dann vollflächig auf dem Greifkörper 44 auf. Die Rückstellfeder 47 wird hierdurch weiter unter Druckspannung gesetzt, so dass das Druckstück 40 wieder ausfedert, wenn der Werkstückträger von der Greifeinrichtung abgenommen wird.

Hinzuweisen ist noch darauf, dass die Unterseite 52 des Druckstücks 40 in keiner Drehstellung über die Unterseite 53 des Greifkörpers übersteht, so dass ein Blockieren des Druckstücks 40 nicht zu befürchten ist.

Weiter ist in Fig. 5 die Greifebene 27, welche von den Greifkanten 23; 24 definiert wird, als Strichpunktlinie eingezeichnet.

### Bezugszeichenliste

- 10: Förderer
- 11: erster Förderträger
- 12: zweiter Förderträger
- 13: erster Abstand zwischen den Förderträgern
- 14: Hochachse
- 15: Förderrichtung
- 16: Förderriemen
- 17: Seitenführungsleiste

- 20: Greifeinrichtung
- 21: Hauptkörper
- 22: Eckbereich
- 23: erste Greifkante
- 24: zweite Greifkante
- 25: zweiter Abstand zwischen zwei Greifkanten
- 26: Greifrechteck
- 27: Greifebene
- 28: dem Werkstückträger zugewandte Seite
- 29: dem Werkstückträger abgewandte Seite

- 40: Druckstück
- 41: ebene Oberfläche des Druckstücks
- 42: Drehachse
- 42a: Bohrung
- 42b: Zylinderstift
- 43: Anschlagfläche
- 44: Greifkörper
- 44a: Symmetriemitte des Greifkörpers
- 45: ebene Oberfläche des Greifkörpers
- 46: Gegenanschlagfläche
- 47: Rückstellfeder
- 48: Federgehäuse
- 49: Kugel
- 50: Befestigungsbohrung im Greifkörper
- 51: Nut
- 52: Unterseite des Druckstücks
- 53: Unterseite des Greifkörpers

- 60: Werkstückträger
- 61: Auflageplatte
- 62: Rahmen
- 63: Rahmenteil
- 64: Vereinzelerdurchlass
- 65: Innenumfangsfläche des Rahmes
- 66: Unterseite der Auflageplatte

- 70: Drehvorrichtung
- 71: Drehantrieb
- 72: Hubantrieb
- 73: Gestell der Drehvorrichtung
- 74: Befestigungsfläche für den ersten Förderträger
- 75: Befestigungsfläche für den zweiten Förderträger

## Patentansprüche

1. Greifeinrichtung (20) zum Greifen eines plattenartigen Werkstückträgers (60), wobei die Greifeinrichtung (20) einen Hauptkörper (21) aufweist, der bezüglich einer Hochachse (14) drehbar gelagert ist, wobei die Greifeinrichtung (20) vier Eckbereiche (22) aufweist, an denen jeweils eine erste und eine zweite gerade Greifkante (23; 24) angeordnet ist, welche im rechten Winkel zueinander angeordnet sind, wobei die Eckbereiche (22) derart verteilt um die Hochachse (14) angeordnet sind, dass die Greifkanten (23; 24) ein Greifrechteck (26) definieren, wobei die Greifeinrichtung (20) vollständig innerhalb des Greifrechtecks (26) angeordnet ist, wobei die Greifkanten eine Greifebene (27) definieren, die senkrecht zur Hochachse (14) angeordnet ist, wobei die Greifeinrichtung (20) vollständig auf einer Seite der Greifebene (27) angeordnet ist, wobei den Greifkanten (23; 24) jeweils ein gesondertes Druckstück (40) zugeordnet ist, welches beweglich relativ zum Hauptkörper (21) gelagert ist, **dadurch gekennzeichnet, dass** die Druckstücke (40) jeweils bezüglich einer Drehachse (42) derart drehbar gelagert sind, dass sich der Abstand zweier paralleler Greifkanten (23; 24) durch Einwirkung einer Gewichtskraft des Werkstückträgers (60) auf die Druckstücke (40) vergrößert, wobei die Drehachse (42) senkrecht zur Hochachse (14) verläuft, wobei den Druckstücken (40) jeweils eine Rückstellfeder (47) zugeordnet ist, welche so eingebaut ist, dass sie durch Einwirkung einer Gewichtskraft des Werkstückträgers (60) auf die Druckstücke (40) unter Spannung gesetzt wird.

2. Greifeinrichtung nach einem der vorstehenden Ansprüche,
**dadurch gekennzeichnet, dass** in jedem Eckbereich (22) ein gesonderter Greifkörper (44) angeordnet ist, welcher fest mit dem Hauptkörper (21) verbunden ist, wobei die Druckstücke (40) an einem zugeordneten Greifkörper (44) beweglich gelagert sind.

3. Greifeinrichtung nach Anspruch 2,
**dadurch gekennzeichnet, dass** die Greifkörper (44) und die Druckstücke (40) an der dem Werkstückträger (60) zugewandten Seite (28) jeweils eine ebene Oberfläche (45; 41) aufweisen, wobei die beiden genannten ebenen Oberflächen (45; 41) in einer Stellung der Druckstücke (40) in einer Flucht angeordnet sind.

4. Greifeinrichtung nach einem der vorstehenden Ansprüche,
**dadurch gekennzeichnet, dass** die Druckstücke (40) jeweils eine Anschlagfläche (43) aufweisen, welche so angeordnet ist, dass sie von der Rückstellfeder (47) gegen eine zugeordnete Gegenanschlagfläche (46) gedrückt wird, wenn sich kein Werkstückträger (60) auf der Greifeinrichtung (20) befindet.

5. Greifeinrichtung nach Anspruch 4,
**dadurch gekennzeichnet, dass** die Rückstellfeder (47) von einem Federgehäuse (48) und einer Kugel (49) umschlossen wird, wobei die Kugel (49) das Druckstück (40) unmittelbar berührt.

6. Greifeinrichtung nach Anspruch 5, **dadurch gekennzeichnet, dass** die Kugel (49) das Druckstück (40) auf der vom Werkstückträger (60) abgewandten Seite (29) der Drehachse (42) berührt.

7. Förderer (10) mit einer Greifeinrichtung (20) nach einem der vorstehenden Ansprüche,
**dadurch gekennzeichnet, dass** der Förderer (10) einen ersten und einen zweiten Förderträger (11; 12) aufweist, die sich unter einem ersten Abstand (13) beabstandet in eine Förderrichtung (15) erstrecken, wobei die Druckstücke (40) so angeordnet sind, dass ein zweiter Abstand (25) zweier paralleler Greifkanten (23; 24) kleiner als der erste Abstand (13) ist, wenn kein Werkstückträger (60) auf der Greifeinrichtung (20) aufliegt, wobei der zweite Abstand (25) größer als der erste Abstand (13) ist, wenn ein Werkstückträger (60) auf der Greifeinrichtung (20) aufliegt.

## Claims

1. Gripping device (20) for gripping a plate-shaped workpiece carrier (60), wherein the gripping device (20) has a main body (21) which is mounted so as to be rotatable with regard to a vertical axis (14), wherein the gripping device (20) has four corner regions (22), at which a first and a second straight gripping edge (23; 24), respectively, which are arranged at right angles to one another, are arranged, wherein the corner regions (22) are arranged in a manner distributed about the vertical axis (14) such that the gripping edges (23; 24) define a gripping rectangle (26), wherein the gripping device (20) is arranged entirely within the gripping rectangle (26), wherein the gripping edges define a gripping plane (27) which is arranged perpendicularly to the vertical axis (14), wherein the gripping device (20) is arranged entirely on one side of the gripping plane (27), wherein the gripping edges (23; 24) are each assigned a separate pressure piece (40) which is mounted so as to be movable relative to the main body (21), **characterized in that** the pressure pieces (40) are each mounted in a rotatable manner with respect to an axis of rotation (42) such that the spacing between two parallel gripping edges (23; 24) is increased by the action of a weight force of the workpiece carrier (60) on the pressure pieces (40), wherein the axis of rotation (42) extends perpendicularly to the vertical axis (14), wherein the pressure pieces (40) are each assigned a return spring (47) which is constructed such that it is put under tension by the action of a weight force of the workpiece carrier (60) on the pressure pieces (40).

2. Gripping device according to one of the preceding claims,
**characterized in that** a separate gripping body (44), which is connected firmly to the main body (21), is arranged in each corner region (22), wherein the pressure pieces (40) are mounted in a movable manner on an associated gripping body (44).

3. Gripping device according to Claim 2, **characterized in that** the gripping bodies (44) and the pressure pieces (40) each have a planar surface (45; 41) on the side (28) facing the workpiece carrier (60), wherein said two planar surfaces (45; 41) are arranged in an aligned manner in one position of the pressure pieces (40).

4. Gripping device according to one of the preceding claims,
**characterized in that** the pressure pieces (40) each have a stop surface (43) which is arranged such that it is pushed against an associated mating stop surface (46) by the return spring (47) when no workpiece carrier (60) is located on the gripping device (20).

5. Gripping device according to Claim 4, **characterized in that** the return spring (47) is enclosed by a spring housing (48) and a ball (49), wherein the ball (49) is in direct contact with the pressure piece (40).

6. Gripping device according to Claim 5, **characterized in that** the ball (49) is in contact with the pressure piece (40) on that side (29) of the axis of rotation (42) that is remote from the workpiece carrier (60).

7. Conveyor (10) having a gripping device (20) according to one of the preceding claims, **characterized in that** the conveyer (10) has a first and a second conveying carrier (11; 12) which extend in a conveying direction (15) in a manner spaced apart at a first spacing (13), wherein the pressure pieces (40) are arranged such that a second spacing (25) between two parallel gripping edges (23; 24) is smaller than the first spacing (13) when no workpiece carrier (60) is resting on the gripping device (20), wherein the second spacing (25) is greater than the first spacing (13) when a workpiece carrier (60) is resting on the gripping device (20).

## Revendications

1. Dispositif préhenseur (20) pour saisir un support de pièce (60) en forme de plaque, le dispositif préhenseur (20) présentant un corps principal (21) qui est supporté de manière rotative par rapport à un axe vertical (14), le dispositif préhenseur (20) présentant quatre régions de coin (22) au niveau desquelles sont à chaque fois disposées une première et une deuxième arête de préhension droite (23 ; 24), lesquelles sont disposées à angle droit l'une par rapport à l'autre, les régions de coin (22) étant disposées de manière répartie autour de l'axe vertical (14) de telle sorte que les arêtes de préhension (23 ; 24) définissent un rectangle de préhension (26), le dispositif préhenseur (20) étant disposé complètement à l'intérieur du rectangle de préhension (26), les arêtes de préhension définissant un plan de préhension (27) qui est disposé perpendiculairement à l'axe vertical (14), le dispositif préhenseur (20) étant disposé complètement sur un côté du plan de préhension (27), une pièce de pression séparée (40) étant à chaque fois associée aux arêtes de préhension (23 ; 24) et étant supportée de manière déplaçable par rapport au corps principal (21), **caractérisé en ce que** les pièces de pression (40) sont supportées à rotation à chaque fois par rapport à un axe de rotation (42) de telle sorte que la distance de deux arêtes de préhension parallèles (23 ; 24) augmente sous l'effet de l'application d'une force de poids du support de pièce (60) sur les pièces de pression (40), l'axe de rotation (42) s'étendant perpendiculairement à l'axe vertical (14), un ressort de rappel (47) étant à chaque fois associé aux pièces de pression (40), lequel est disposé de telle sorte qu'il soit sous contrainte lors de l'application d'une force de poids du support de pièce (60) sur les pièces de pression (40).

2. Dispositif préhenseur selon l'une quelconque des revendications précédentes, **caractérisé en ce que** dans chaque région de coin (22) est disposé un corps de préhension séparé (44) qui est connecté fixement au corps principal (21), les pièces de pression (40) étant supportées de manière déplaçable sur un corps de préhension associé (44).

3. Dispositif préhenseur selon la revendication 2, **caractérisé en ce que** les corps de préhension (44) et les pièces de pression (40) présentent, au niveau du côté (28) tourné vers le support de pièces (60), à chaque fois une surface plane (45 ; 41), lesdites deux surfaces planes (45 ; 41) étant disposées en affleurement dans une position des pièces de pression (40).

4. Dispositif préhenseur selon l'une quelconque des revendications précédentes, **caractérisé en ce que** les pièces de pression (40) présentent à chaque fois une surface de butée (43) qui est disposée de telle sorte qu'elle soit pressée par le ressort de rappel (47) contre une surface de butée conjuguée associée (46) lorsqu'aucun support de pièce (60) ne se trouve sur le dispositif préhenseur (20).

5. Dispositif préhenseur selon la revendication 4, **caractérisé en ce que** le ressort de rappel (47) est entouré par un boîtier de ressort (48) et une bille (49), la bille (49) étant directement en contact avec la pièce de pression (40).

6. Dispositif préhenseur selon la revendication 5, **caractérisé en ce que** la bille (49) vient en contact avec la pièce de pression (40) sur le côté (29) de l'axe de rotation (42) opposé au support de pièce (60).

7. Convoyeur (10) comprenant un dispositif préhenseur (20) selon l'une quelconque des revendications précédentes, **caractérisé en ce que** le convoyeur (10) présente un premier et un deuxième support de transport (11 ; 12) qui s'étendent dans une direction de transport (15) à une première distance (13) l'un de l'autre, les pièces de pression (40) étant disposées de telle sorte qu'une deuxième distance (25) de deux arêtes de préhension parallèles (23 ; 24) soit inférieure à la première distance (13) lorsqu'aucun support de pièce (60) ne repose sur le dispositif préhenseur (20), la deuxième distance (25) étant supérieure à la première distance (13) lorsqu'un support de pièce (60) repose sur le dispositif préhenseur (20).
